# EUROPEAN PATENT APPLICATION

(11) **EP 2 472 008 A1**
(43) Date of publication of application: **04.07.2012**
(21) Application number: 10197398.0
(22) Date of filing: 30.12.2010
(51) Int. Cl.: E02B 17/02, B66C 23/18, E02D 27/42

(54) **Jack-up offshore platform and its use for lifting large and heavy loads**

(71) Applicant: GeoSea NV, 2070 Zwijndrecht (BE)
(72) Inventor: Vandenbulcke, Luc, 2550 Kontich (BE); Vanderbeke, Koen, 3071 Erps-Kwerps (BE)
(74) Representative: Brouwer, Hendrik Rogier

(57) **Abstract**

The invention relates to a jack-up offshore platform, comprising a work deck (29), supported by a number of spud poles (14), and a lifting device (16) configured for lifting a load of at least 200 tons. The lifting device comprises an assembly of booms (17) that at one end connect to a number of mutually spaced apart boom pivots (20,21), and at the other end join to form a common guide (22) for a lifting cable. The lifting device further comprises a tensioning cable (25a,25b) that at one end connects to the work deck (29) and at the other end connects to the assembly and is configured to hold and rotate the assembly of booms around the boom pivots. The invented jack-up platform allows to lift and manipulate large and heavy loads, in particular the jacket of a wind mill.

## Description

The invention relates to a jack-up offshore platform, comprising a work deck, supported by a number of spud poles, and a lifting device configured for lifting a load of at least 200 tons. The invention also relates to the use of the jack-up offshore platform for lifting large and heavy loads, such as a jacket of a windmill. The invention in particular relates to the use of the jack-up platform for positioning a jacket of a windmill on a foundation at sea.

An increasing amount of large structures is build or placed at sea. An offshore wind turbine for instance uses a tower of more than 100 meters high above sea level to support a nacelle and hub for holding rotor blades, which can have a length of 70 meters and more. In one type of wind turbine, the supporting structure for the tower comprises a trussed structure, referred to as a jacket. A large part of the jacket extends under water where it takes support onto the sea bed. The jacket itself can be 80 meters high, 20 meters wide at the bottom and 1-15 meters wide at the top, and may typically weigh 200 tons and more. The foundation of the jacket is typically formed by a plurality of piles that are pneumatically driven into the underwater bottom by a pneumatic hammer. The piles may be hollow and open-ended although this is not necessary. In a so-called prepiling operation, the piles are provided into the substrate according to a desired geometrical pattern, where after the jacket is installed onto the foundation formed by the plurality of piles by inserting legs of the jacket into the piles. The hollow piles receive the legs of the jacket, which legs are then secured to the hollow piles by providing grout in the space between the legs and the inner surface of the piles. In another technique the jacket is installed onto the foundation formed by the plurality of piles by inserting the piles of the foundation into hollow and open-ended legs of the jacket. In a so-called postpiling operation, the piles are provided into the substrate according to a desired geometrical pattern only after the jacket has been installed onto the underwater bottom, which then serves as foundation for the jacket.

The state of the art uses floating sheer legs. These floating structures however are not suited for the ever and ever larger and heavier structures that have to be lifted. Floating sheer legs also cannot be used under certain weather conditions such as in heavy weather.

One object of the invention is to provide a device for lifting a load of at least 200 tons at sea. A further obj ect of the invention is to provide a device for lifting the jacket of a windmill, and position it on a foundation at sea.

According to the invention, this object is achieved by a jack-up offshore platform, comprising a work deck, supported by a number of spud poles, and a lifting device configured for lifting a load of at least 200 tons, the lifting device comprising an assembly of booms that at one end connect to a number of mutually spaced apart boom pivots, and at the other end join to form a common guide for a lifting cable, the lifting device further comprising a tensioning cable that at one end connects to the work deck and at the other end connects to the assembly and is configured to hold and rotate the assembly of booms around the boom pivots. In operation the spud poles are lowered until they take support on the sea bottom. This stabilizes the platform and allows to accurately manipulate the large structure, preferably a jacket for a wind turbine when lifting it. The device allows to lift loads at a significant wave height of at least 1 meter, and up to 1,5-2 meters without losing accuracy. The device according to the state of the art can only be operated at a significant wave height of 0,7-0,8 meter at most.

The lifting device according to the invention is configured for lifting a load of at least 200 tons, more preferably of at least 300 tons, even more preferably of at least 500 tons, even more preferably at least 800 tons, even more preferably of at least 1200 tons, and most preferably at least 1400 tons. The lifting device according to the invention further is configured for lifting loads at sea where water depths exceed 25 m, more preferably 35 m, even more preferably exceed 45 m, and most preferably exceed 55 m.

An additional advantage of the jack-up offshore platform according to the invention is that its lifting device does not take up a lot of space, and moreover is less heavy than state of the art lifting cranes of this size. This is an important advantage since this increases the load capacity of the jack-up platform. Load capacity is further benefited by using an assembly of booms over which booms the load is distributed.

In the above described embodiment, the tensioning cable at one end connects to the work deck and at the other end connects to the assembly of booms. The connection to the work deck may be direct or through some intermediate structure, as long as such structure is configured to hold and rotate the assembly of booms around the boom pivots. In a preferred embodiment of the invention, a jack-up offshore platform is provided, comprising an assembly of secondary booms configured to keep the tensioning means at a distance from the boom pivots, and, connected to the assembly of secondary booms, counterbalancing means for the load. Such an embodiment allows to pivot and move the assembly of booms more freely.

The pivots around which the booms are rotatable around an axis that runs substantially parallel to the work deck of the platform may be fixed to the work deck by a permanent connection or by a movable connection. A preferred embodiment of the jack-up offshore platform according to the invention provides guiding tracks on the work deck of the platform along which guiding tracks the boom pivots and/or the counterbalancing means may be moved.

To further increase the freedom to move a lifted object, the jack-up offshore platform according to one embodiment is characterized in that the common guide comprises a guiding means for the lifting cable, which guiding means is able to translate in a direction that is substantially parallel to the work deck. This embodiment enables to translate the guiding means, for instance a pulley or a hoisting eye or hook, about parallel to the work deck over a distance that depends on the dimensions of the common guide. The common guide may for instance comprise a support beam or cross bar provided with a track for the guiding means.

In another embodiment of the invention, a jack-up offshore platform is provided wherein the common guide is slidably connected to the booms such that the height of the common guide with respect to the platform work deck may be altered.

Still another embodiment of the invention is characterized in that the guiding means is able to rotate around an axis that extends about perpendicular to the work deck of the platform. A similar effect may be reached by tilting one boom to a larger extend then the other boom in the assembly of booms.

The jack-up platform according to the invention allows to lift heavy loads in an accurate manner. This object is even better achieved by a jack-up offshore platform according to an embodiment, comprising at least two assemblies of booms. The assemblies of booms may be positioned anywhere on the work deck of the platform but are preferably positioned close and next to each other, such that they extend along a line that is parallel to an edge of the work deck of the platform.

In order to further increase the load bearing capacity of the lifting device without taking more space it is proposed in another embodiment to provide a jack-up offshore platform, wherein the at least two assemblies are mutually connected by a support beam substantially parallel to the work deck.

The jack-up platform according to the invention is particularly suitable for accurately manipulating large and heavy loads, also in rough sea. To be able to manipulate the jacket of a typical wind turbine for instance, a preferred embodiment of the jack-up offshore platform according to the invention comprises an assembly of booms having a height of more than 50 meter, preferably more than 80 meter and most preferably more than 100 meter. The particular arrangement of the lifting device according to the invention allows to use such large dimensions without having to use a jack-up platform that is larger than usual. It is also possible to envisage an embodiment wherein the height of the assembly of booms is flexible by using different booms.

The lifting device of the jack-up platform according to the invention preferably comprises at least one sensor for detecting forces, and control means for counterbalancing the load such that the lifting device remains in equilibrium on the basis of the outcome of the detected forces. The detected forces for a certain load can be influenced by changing the position of the lifting device and in particular the assembly of booms, and/or by tightening or loosening the tensioning cable, and/or eventually also by tightening or loosening other cables provided between different parts of the lifting device.

A jack-up offshore platform on which is provided a lifting device according to the invention is particularly advantageous, since the lifting capacity of the lifting device can easily be enlarged, for instance by increasing the number of booms in the assemblies and/or by increasing the number of assemblies. Providing more booms and/or assemblies takes up less workspace than when using more or larger lifting cranes, as is typically done in the state of the art.

The invention further relates to the use of a jack-up offshore platform according to the invention for lifting and positioning a jacket of a windmill in a foundation at sea.

In one embodiment, the foundation is formed by a plurality of piles provided in the underwater bottom. In such use, when all piles have been provided into the substrate according to a desired geometrical pattern, the jacket is installed onto the foundation formed by the plurality of piles by inserting legs of the jacket into the piles, which are in this embodiment hollow and open-ended. The hollow piles receive the legs of the jacket, which legs are then secured to the hollow piles by providing grout in the space between the legs and the inner surface of the piles.

In another embodiment, the piles of the foundation are inserted into hollow and open-ended legs of the jacket which legs are then secured to the piles by providing grout in the space between the legs and the outer surface of the piles.

In yet another embodiment, the foundation is formed by the underwater bottom. In such use, the jacket is installed onto the underwater bottom, which may have been levelled before, after which the piles are provided into the substrate according to a desired geometrical pattern through the legs of the jacket.

Installing the huge jacket requires manipulating the jacket in assembled form such that its legs are accurately positioned relative to the position of the foundation piles or underwater bottom, for instance to be able to insert the legs in the relatively small upper holes of the foundation piles. Providing a jack-up platform close to the location of the foundation piles and lowering the spud poles until they take support on the sea bottom, effectively stabilizes the jack-up platform and the lifting devices, such that an accurate manipulation of the jacket becomes possible, also in windy weather, where the significant wave height is 1,5-2 meters and more. The jacket is lifted by the booms by gripping it at its top, or at positions that are above its center of gravity.

The invention will now be explained in more detail with reference to the drawings, without however being limited thereto and wherein:
Fig. 1 schematically shows a wind turbine with jacket,
Fig. 2 schematically shows a front view of an embodiment of the jack-up offshore platform according to the invention; and
Fig. 3 schematically shows a side view of the embodiment shown in figure 2.

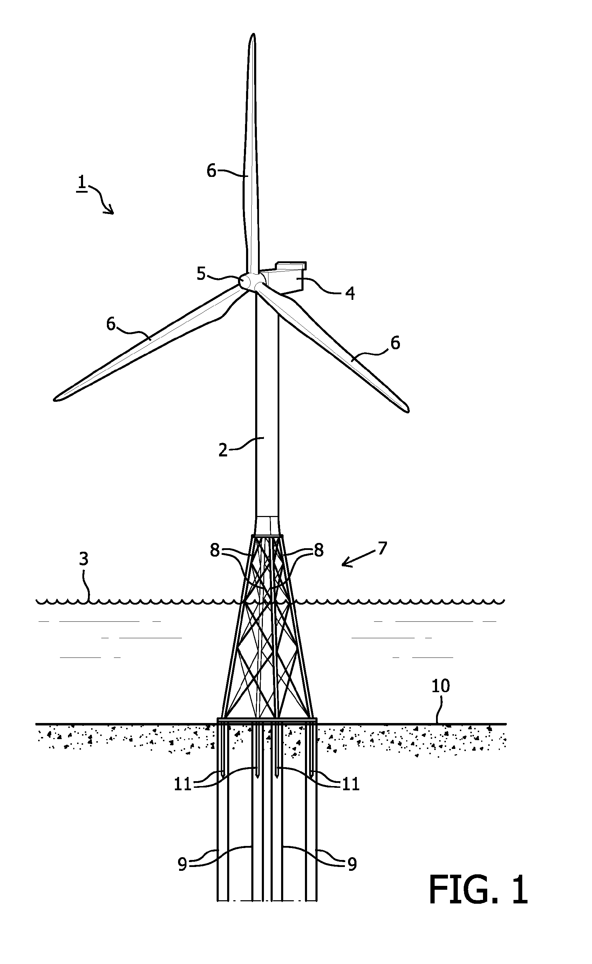

With reference to figure 1, an offshore wind turbine 1 is shown, comprising a tower 2 that extends above the sea level 3. The tower 2 of the wind turbine 1 supports a nacelle 4 that drives a hub 5 for holding three rotor blades 6 in the example given. The tower 2 of wind turbine 1 is supported by a jacket 7, which is a framework of a relatively large number of steel members 8. As shown in figure 1, a large part of the jacket 7 extends under water. The jacket 7 is supported by a foundation, formed by a plurality of hollow and open-ended piles 9 that are pneumatically driven into the underwater bottom 10 by a pneumatic hammer for instance. To install the jacket 8 onto the foundation formed by the plurality of piles 9, the jacket 8 is provided with legs 11 of variable length, typically provided at the corners of the bottom frame of the jacket 9. The jacket 8 has to be lifted and manipulated such that the legs 11 are inserted into the open ends of piles 9 and lowered therein over a desired and predetermined distance. The hollow piles 9 receive the legs 11 of the jacket 8, which legs 11 are then secured to the hollow piles 9 by providing grout in the space between the legs 11 and the inner surface of the piles 9.

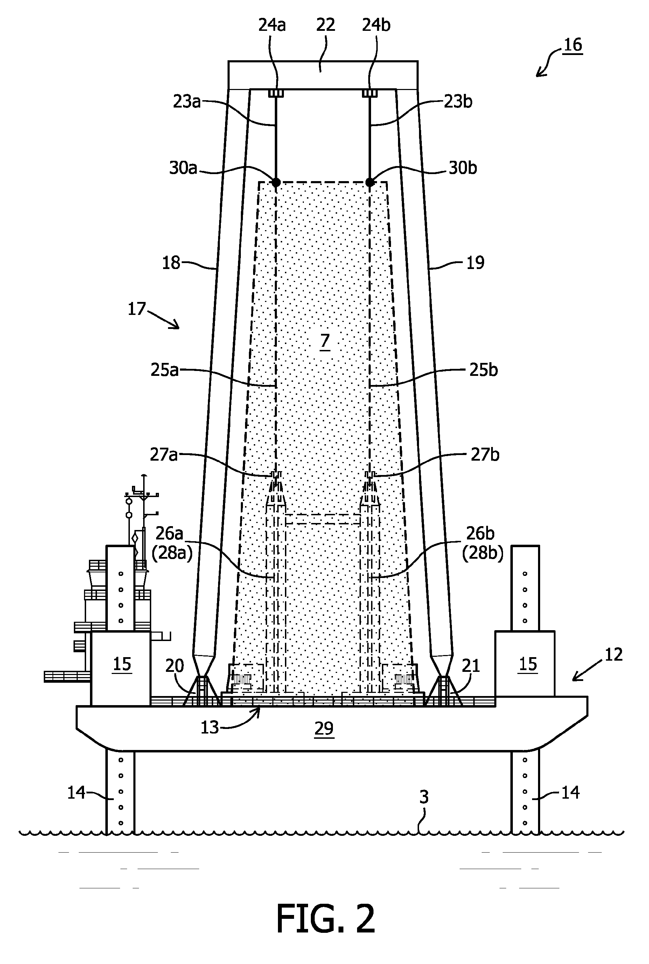

To be able to manipulate the jacket, which may easily be 80 m high and 20 m wide at its bottom, a jack-up offshore platform is provided, an embodiment of which is shown in figure 2. The jack-up platform 12 comprises a work deck 13, which is supported by four spud poles 14 at its corners, only two of which are shown. The spud poles 14 can be lowered from the work deck 13 by brackets 15 until they take support onto the sea bottom 10. Further lowering the spud poles 14 jacks up the work deck 13 above sea level 3, and stabilizes the jack-up platform 12 against the action of waves. Jack-up platform 12 is further equipped with a lifting device 16, comprising an assembly 17 of two booms (18, 19). The booms (18, 19) at their lower end connect to two boom pivots (20, 21) that are mutually spaced apart over some distance. The booms (18, 19) at their top end join to form a common guide 22 for two lifting cables (23a, 23b), configured for lifting a load of at least 200 tons, and more preferably at least 800 tons. The common guide 22 is equipped with guiding means (24a, 24b) which may be any guide for a lifting cable, such as a pulley for instance and/or a hoisting hook. This guiding means (24a, 24b) are able to translate along the common guide (22) in the transverse direction about parallel to the work deck 13 over a distance that depends on the dimensions of the common guide, which may take the form of a truss network of solid beam.

The lifting device 16 further comprises tensioning cables (25a, 25b), which may be part of the lifting cables (23a, 23b) or may be separate from these. Tensioning cables (25a, 25b) are configured to hold and rotate the assembly of booms (18, 19) around the boom pivots (20, 21). Tensioning cables (25a, 25b) connect at their lower end to the work deck 13 and at their top end connect to the assembly of booms (18, 19). In the embodiment shown in figure 2, the connection to the work deck 13 is made through counterbalancing means in the form of two substantially vertically extending masts (26a, 26b), provided on the work deck 13 and connected thereto. The tensioning cables (25a, 25b) are attached to eyelets (27a, 27b) provided at the upper end of masts (26a, 26b). The lifting device 16 further comprises an assembly of secondary booms (28a, 28b) configured to keep the tensioning means (25a, 25b) at a distance from the respective boom pivots (20, 21). Tensioning cables (25a, 25b) and lifting cables (23a, 23b) are shortened and lengthened by actuators and winches (not shown in detail), but any means known in the art may be used for this purpose.

Pivots (20, 21) are configured such that the booms (18, 19) are rotatable at least around an axis that runs parallel to the work deck 13 and about parallel to the edge 29 of the work deck 13. In the embodiment shown, the pivots (20, 21) are fixed to the work deck 13 by a rigid connection.

The jack-up platform 12 according to the invention allows to lift heavy loads in an accurate manner by providing at least two assemblies 17 of booms. The assemblies 17 may be positioned anywhere on the work deck 13 of the platform 12 but are preferably positioned close and next to each other, such that they extend along a line that is about parallel to the edge 29 of the work deck 13.

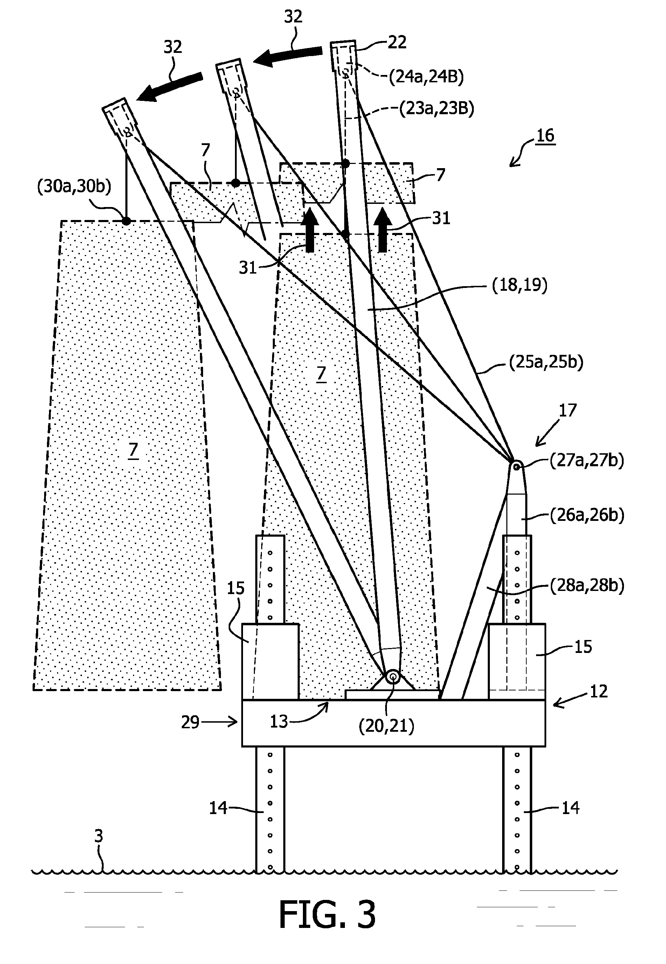

The jack-up offshore platform 12 according to the embodiment described above can be used advantageously for lifting and positioning a jacket 7 of a windmill 1 on a foundation at sea, the foundation being formed for instance by a plurality of hollow and open-ended piles 9 provided in the sea bed 10. The jacket 7 is manipulated by gripping it at its top end via connectors (30a, 30b) or at another location preferably above its center of gravity through the lifting cables (23a, 23b) such that its legs 11 are inserted in the relatively small upper holes of the foundation piles 9. A shown in figure 3, the jacket 7 may be manipulated by lifting it from a lowest position, where the jacket 7 rests on the work deck 13 of the platform (this is the position shown on the right in figure 3) to a lifted position according to arrows 31. For this lifted position, only the top part of the jacket 7 is shown in figure 3 for reasons of clarity. Lifting is performed by tightening the lifting cables (23a, 23b) which moves the connectors (30a, 30b) to an elevated position. The jacket 7 is then brought overboard by rotating the booms (18, 19) around the pivots (20, 21) as schematically shown in figure 3 by the arrows 32. For this rotated position also, only the top part of the jacket 7 is shown in figure 3 for reasons of clarity. Rotating is performed by slackening the tensioning cables (25a, 25b) which moves the connectors (30a, 30b) and the jacket to the left in figure 3 until the jacket 7 extends further than the work deck 13 of platform 12. In this overboard position the jacket 7 is then lowered into the sea while manipulating it such that it accurately fits the foundation.

By providing a jack-up platform 12 close to the location of the foundation piles 9, and preferably with its edge 29 at the side of the foundation piles 9, and lowering the spud poles 14 to stabilize the jack-up platform 12 and the lifting device 16, allows an accurate manipulation of the jacket 7, also in windy weather, where the significant wave height is 1,5-2 meters and more.

The invention is not limited to the embodiment shown in figures 2 and 3, and many variations of the design of the lifting device are possible within the scope of the claims attached hereto.

## Claims

1. A jack-up offshore platform, comprising a work deck, supported by a number of spud poles, and a lifting device configured for lifting a load of at least 200 tons, the lifting device comprising an assembly of booms that at one end connect to a number of mutually spaced apart boom pivots, and at the other end connect to a common guide for a lifting cable, the lifting device further comprising a tensioning cable that at one end connects to the work deck and at the other end connects to the assembly and is configured to hold and rotate the assembly of booms around the boom pivots.

2. Jack-up offshore platform according to claim 1, comprising an assembly of secondary booms configured to keep the tensioning means at a distance from the boom pivots, and, connected to the assembly of secondary booms, counterbalancing means for the load.

3. Jack-up offshore platform according to claim 1 or 2, wherein the common guide is slidably connected to the booms such that the height of the common guide with respect to the platform work deck may be altered.

4. Jack-up offshore platform according to any one of the preceding claims, wherein the common guide comprises a guiding means for the lifting cable, which guiding means is able to translate in a direction that is substantially parallel to the work deck.

5. Jack-up offshore platform according to claim 4, wherein the guiding means is able to rotate around an axis that extends about perpendicular to the work deck of the platform.

6. Jack-up offshore platform according to any one of the preceding claims, comprising at least two assemblies of booms.

7. Jack-up offshore platform according to any one of the preceding claims, wherein the assembly of booms has a height of more than 50 meter, preferably more than 80 meter and most preferably more than 100 meter.

8. Use of a jack-up offshore platform according to any one of claims 1 - 7 for lifting and positioning a jacket of a windmill on a foundation at sea.

9. Use according to claim 8, the foundation being formed by a plurality of hollow and open-ended piles provided in the underwater bottom.

10. Use according to claim 8, the foundation being formed by the underwater bottom and, optionally, a plurality of piles provided in the underwater bottom after the jacket has been positioned.
